Europäisches Patentamt

(19) European Patent Office

Office européen des brevets

(11) Numéro de publication: **0 241 332**
**B1**

(12) **FASCICULE DE BREVET EUROPEEN**

(45) Date de publication du fascicule du brevet: **16.01.91**

(51) Int. Cl.$^5$: **G 01 D 5/34**

(21) Numéro de dépôt: **87400573.9**

(22) Date de dépôt: **13.03.87**

(54) **Procédé et dispositif de détection opto-électronique à distance de grandeurs physiques.**

(30) Priorité: **13.03.86 FR 8603598**

(43) Date de publication de la demande:
**14.10.87 Bulletin 87/42**

(45) Mention de la délivrance du brevet:
**16.01.91 Bulletin 91/03**

(84) Etats contractants désignés:
**AT BE CH DE ES FR GB GR IT LI LU NL SE**

(56) Documents cités:
**FR-A-2 340 540**
**FR-A-2 553 878**

**OPTICS LETTERS, vol. 11, no. 7, aôut 1986, pages 543-545, Optical Society of America, New York, US; PH. DABKIEWICZ et al.: "Fiber-optic angular sensor with interleaved channel spectra"**

(73) Titulaire: **BERTIN & CIE**
**Zone Industrielle Boîte postale 3**
**F-78373 Plaisir Cédex (FR)**

(72) Inventeur: **Lequime, Michel René**
**6 rue des Sauries**
**F-13510 Eguilles (FR)**

(74) Mandataire: **Ramey, Daniel**
**Cabinet Ores 6 Avenue de Messine**
**F-75008 Paris (FR)**

EP 0 241 332 B1

Courier Press, Leamington Spa, England.

# EP 0 241 332 B1

**Description**

L'invention concerne un procédé et un dispositif de détection opto-électronique à distance de grandeurs physiques, au moyen de capteurs qui comprennent chacun un élément sensible dont la transmission spectrale varie en fonction d'une grandeur physique à mesurer, qui sont éclairés par un faisceau de lumière incohérente et qui transmettent des signaux lumineux à des moyens d'analyse spectrale.

Depuis l'apparition des fibres optiques, il est devenu courant d'utilise les modifications de transmission spectrale d'un milieu matériel pour détecter à distance la variation d'une grandeur physique telle que la température, la composition d'un milieu, le champ magnétique, etc. ...

On connaît en particulier des capteurs à solutions thermochromiques pour lesquelles des variations de température se traduisent par des variations importantes du spectre d'absorption du milieu sensible. Un exemple de réalisation d'un tel capteur est décrit dans l'article M. Breci et al. "Thermocromic Transducer Optical Fiber Temperature Sensor", 2nd International Conference on Optical Fiber Sensors, 5—7 septembre 1984.

On connaît également des capteurs à étalon semi-conducteur, dans lesquels des variations de température du mileu sensible se traduisent par un déplacement du bord de la bande d'absorption. Un capteur de ce type est décrit dans l'article de K. Kyuma, S. Tai, T. Sawada et M. Nunoshita "Fiber-Optic Instrument for Temperature Measurement", IEEE, QE—18, 676, 1982).

On connaît également des capteurs de type colorimétrique, dans lesquels des variations de composition d'un mélange binaire se traduisent par des variations de ses composantes trichromatiques. Un capteur de ce type est décrit dans le brevet français n° 85 550 du 6 juin 1985.

Les méthodes actuelles, comme dans FR—A—2436976 ne permettent pas de multiplexer simplement sur une même fibre optique les informations provenant de plusieurs capteurs identiques du type précité, dans la mesure où les porteuses spectrales utilisées se trouvent toutes confondues.

La présente invention a notamment pour but d'apport une solution simple à ce problème en permettant le multiplexage sur une même fibre optique d'informations spectrales utilisant la même source de lumière et donc la même porteuse.

L'invention propose à cet effet un procédé de détection opto-électronique à distance de grandeurs physiques au moyen de capteurs qui comprennent chacun un élément sensible dont la transmission spectrale varie en fonction d'une grandeur physique à mesurer, qui sont éclairés par un faisceau de lumière incohérente et qui transmettent des signaux lumineux à des moyens d'analyse spectrale, caractérisé en ce qu'il consiste à réaliser un codage des signaux des capteurs en superposant à la lumière transmise par l'élément sensible de chaque capteur une modulation périodique ou quasi-périodique de son spectre à une fréquence caractéristique du capteur considéré, à transmettre ces signaux ainsi modulés par une même fibre optique aux moyens précités d'analyse spectrale, à effectuer un décodage ou démultiplexage des signaux par transformation de Fourier par voie optique pour isoler le signal relatif à chaque capteur, puis à traiter ce signal pour obtention de la valeur de la grandeur physique correspondante.

Avantageusement, le codage par modulation de spectre est réalisé au moyen d'un interféromètre à deux ondes, comprenant par exemple une lame biréfringente de constitution déterminée qui est associée à l'élément sensible du capteur, le démultiplexage étant réalisé au moyen d'un interféromètre à deux ondes de même constitution, comprenant par exemple une lame biréfringente identique à celle du capteur.

Ainsi, de façon extrêmement simple, on réalise, par voie optique, le multiplexage et le démultiplexage des signaux issus des différents capteurs. Ce procédé présente en outre l'avantage de pouvoir être mis en œuvre de façon entièrement statique pour chaque capteur.

Selon une autre caractéristique de l'invention, le procédé consiste également en ce que, pour chaque capteur, on enregistre le signal résultant de la transformation de Fourier et on lui applique une opération mathématique de type transformée de Fourier inverse réalisée par voie numérique.

On peut ainsi avoir accès à l'information qui est significative du comportement du capteur, c'est-à-dire à la valeur de la grandeur physique agissant sur l'élément sensible du capteur.

Selon une autre caractéristique de l'invention, la fréquence de modulation spectrale d'un capteur varie en fonction d'une deuxième grandeur physique différente de celle agissant sur l'élément sensible du capteur, et le signal résultant du démultiplexage par transformation de Fourier permet de remonter simultanément aux valeurs de ces deux grandeurs.

En variante, les éléments sensibles des capteurs peuvent être du type fonctionnant en tout ou rien par rapport à une valeur prédéterminée de la grandeur physique correspondante, et on enregistre alors l'intensité apparente du signal démultiplexé de chaque capteur pour en déduire l'état de la grandeur physique par rapport à sa valeur prédéterminée.

L'invention propose également un dispositif de détection opto-électronique à distance de grandeurs physiques comprenant une source de lumière incohérente reliée par fibre optique à des capteurs qui comportent chacun un élément sensible dont la transmission spectrale varie en fonction d'une grandeur physique à mesurer et qui sont reliés par fibre optique à des moyens d'analyse spectrale, caractérisé en ce que chaque capteur comprend un moyen de codage par modulation spectrale réalisant une modulation périodique ou quasi-périodique de la lumière transmise par l'élément sensible à une fréquence caractéristique du capteur considéré, chaque capteur étant raccordé aux moyens d'analyse spectrale par

2

une fibre optique commune à tous les capteurs, et en ce que les moyens d'analyse spectrale comprennent un interféromètre à deux ondes réalisant par voie optique une transformation de Fourier des signaux reçus des capteurs pour repérer, grâce à sa fréquence caractéristique, le signal relatif à chaque capteur, le dispositif comprenant également des moyens de détection des signaux démultiplexés et des moyens de traitement de ces signaux pour en déduire les valeurs des grandeurs physiques détectées.

Selon une autre caractéristique de l'invention, le moyen de codage par modulation spectrale est un interféromètre à deux ondes, permettant d'introduire entre ces deux ondes une différence de marche caractéristique du capteur correspondant.

Avantageusement, cet interféromètre comprend une lame biréfringente de constitution déterminée placée entre des polariseurs croisés ou parallèles au voisinage immédiat de l'élément sensible du capteur.

L'interféromètre de démultiplexage comprend alors un ensemble de lames biréfringentes dont chacune est identique à la lame biréfringente d'un capteur correspondant, et des moyens pour amener les lames une à une sur l'axe optique de l'interféromètre. Les moyens de détection comprennent des moyens d'enregistrement du signal démultiplexé relatif à chaque capteur, et les moyens de traitement comprennent des moyens de réalisation par voie numérique d'une transformée de Fourier inverse appliquée au signal enregistré.

En variante, les éléments sensibles des capteurs sont du type fonctionnant en tout ou rien par rapport à une valeur prédéterminée de la grandeur physique correspondante. Dans ce cas, il suffit d'enregistrer l'intensité apparente du signal démultiplexé relatif à chaque capteur, pour en déduire si la grandeur physique considérée est supérieure ou inférieure à sa valeur prédéterminée.

De façon générale, l'invention permet donc le multiplexage, sur une même fibre optique, des signaux transmis par plusieurs capteurs de détection d'une grandeur physique, le démultiplexage de ces signaux, et leur traitement pour l'obtention des valeurs d'au moins deux grandeurs physiques en plusieurs points de mesure.

L'invention sera mieux comprise et d'autres détails, caractéristiques et avantages de celle-ci apparaîtront à la lecture de la description explicative qui suit, faite en référence aux desins annexés, dans lesquels:

la figure 1 A représenté schématiquement un dispositif selon l'invention;

la figure 1 B illustre schématiquement le principe général du fonctionnement de ce dispositif;

les figures 2 A, 2 B, 2 C et 2 D illustrent le rôle de la fréquence de modulation utilisée por le codage du signal transmis par un capteur;

les figures 3 A, 3 B, 3 C et 3 D illustrent la relation entre le spectre transmis par un capteur et le signal obtenu après démodulation;

la figure 4 représente schématiquement un mode de réalisation d'un capteur selon l'invention;

la figure 5 représente schématiquement un mode de réalisation d'une partie essentielle des moyens d'analyse spectrale selon l'invention.

Les dessins annexés comprennent au moins pour partie des informations de caractère certain et sont donc annexés à la description, non seulement pour permettre de mieux comprendre celle-ci, mais aussi pour contribuer le cas échéant à la définition de l'invention.

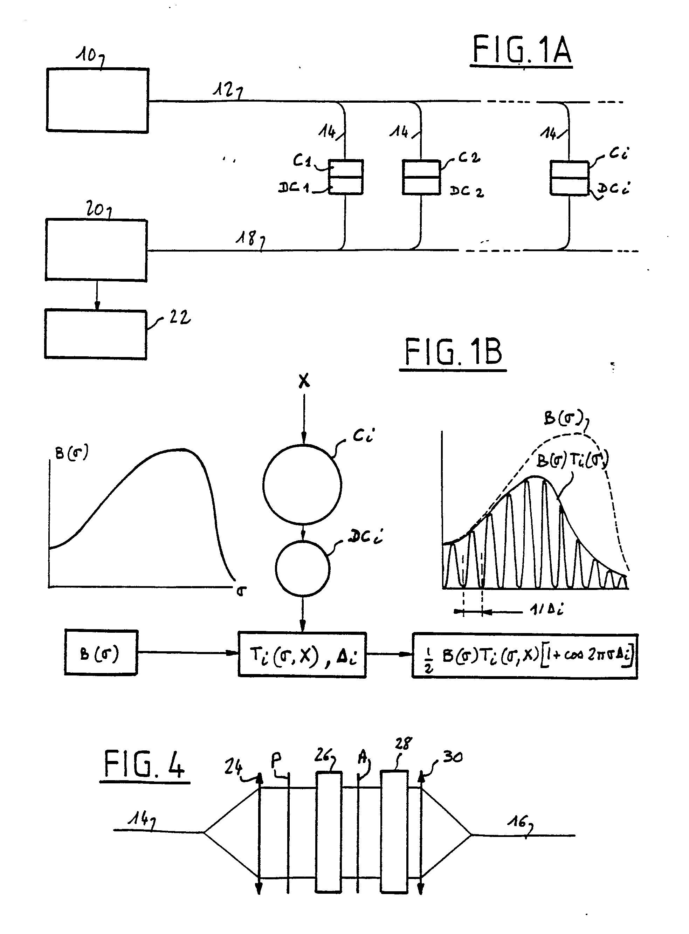

Le dispositif selon l'invention est représenté schématiquement en figure 1 A et comprend une source 10 de lumière incohérente, telle qu'une lampe à filament ou une diode électroluminescente, reliée par une fibre optique 12 d'émission et des fibres de raccordement 14 à des capteurs C 1, C 2, . . ., C i, . . . associés chacun à un dispositif D C 1, D C 2, . . ., D C i, . . . de codage par modulation spectrale de la lumière transmise par un élément du capteur correspondant, qui est sensible à une grandeur physique à mesurer. Les ensembles C 1 − D C 1, C 2 − D C 2, . . . sont reliés par des fibres optiques 16 de raccordement à une fibre optique commune 18 de réception, qui mène à un dispositif 20 de démodulation associé à des circuits 22 de détection et de traitement.

Le fonctionnement d'un ensemble capteur-dispositif de codage est illustré de façon schématique par la figure 1 B. Dans cette figure, B($\sigma$) désigne le spectre du signal lumineux incident sur le capteur, $\sigma$ étant le nombre d'onde. L'élément sensible du capteur C i et soumis à la grandeur physique X à mesurer, qui est par exemple la température, et sa transmission spectrale est désignée par T i ($\sigma$, X).

Le dispositif de codage D C i est un système interférométrique à deux ondes, qui permet d'introduire entre ces deux ondes une différence de marche $\Delta$ i caractéristique du capteur considéré. Ce capteur transmet un spectre d'enveloppe B ($\sigma$) T i ($\sigma$, X) représentatif de l'état de la grandeur physique X au niveau du capteur, sur lequel vient s'ajouter une modulation périodique sinusoïdale de fréquence $\Delta$ i caractéristique du capteur considéré.

Le flux lumineux recueilli par la fibre optique 16 correspondante a donc pour expression générale:

$$B' (\sigma, X, i) = 1/2 \, B (\sigma) \, T i (\sigma, X) (1 + \cos 2\pi\sigma\Delta i)$$

Ce flux lumineux est transmis par la fibre optique 18 au dispositif de démodulation 20 qui, au moyen d'un interféromètre à deux ondes, réalise une transformation de Fourier par voie optique de ce flux lumineux. Pour l'ensemble C i − D C i, le signal obtenu s'écrit:

$$I(D) = 1/2 \int B'(\sigma, X, i) \left[ 1 + \cos 2\pi \sigma D \right] d\sigma$$

$$= 1/4 \left[ \widetilde{B}\,\widetilde{T}\,i\,(0) + \widetilde{B}\,\widetilde{T}\,i\,(D) + 1/2\,\widetilde{B}\,\widetilde{T}\,i\,(D - \Delta\,i) + 1/2\,\widetilde{B}\,\widetilde{T}\,i\,(D + \Delta\,i) \right]$$

où D désigne la différence de la marche dans l'interféromètre de démodulation et $\widetilde{B}\,\widetilde{T}\,i\,(D)$ est la transformée de Fourier cosinus du terme B $(\sigma)$ T i $(\sigma, X)$.

On obtient ainsi trois réponses d'extension spatiale inversément proportionnelle à la largeur spectrale du flux transmis, centrées sur les différences de marche 0, $+ \Delta$ i, $- \Delta$ i, pour chaque capteur.

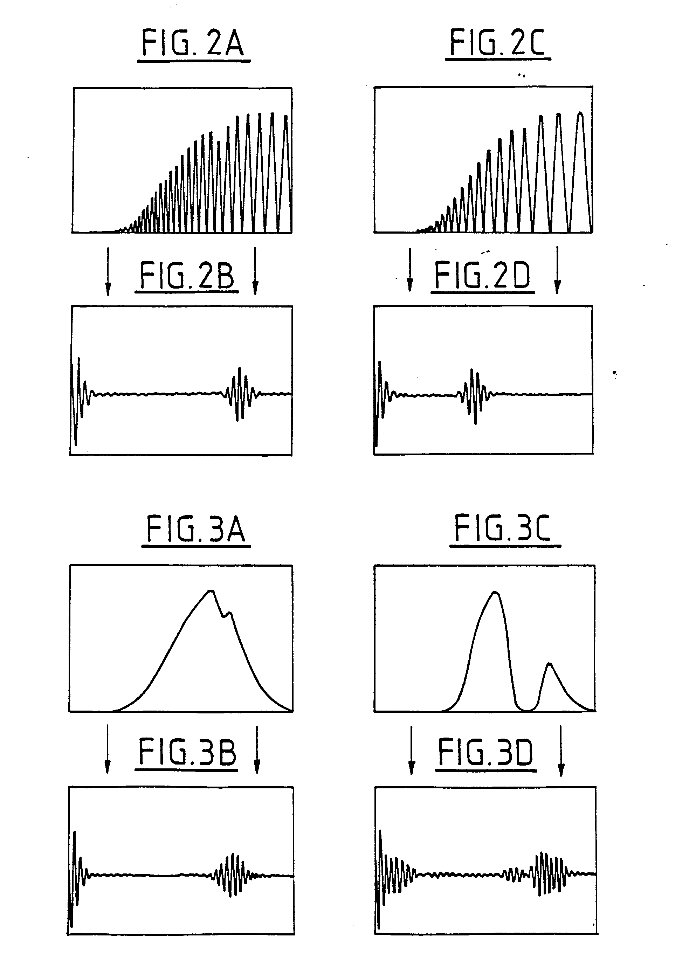

Les figures 2 A, 2 B, 2 C et 2 D illustrent l'influence de la valeur de la fréquence de modulation $\Delta$ i sur le flux lumineux. Les figurs 2 A et 2 C représentent schématiquement un spectre lumineux quelconque codé par deux fréquences de modulation différentes. Les figures 2 B et 2 D représentent les signaux obtenus après démodulation par transformation de Fourie, le signal de la figure 2 B correspondant au flux de la figure 2 A et le signal de la figure 2 D correspondant au flux de la figure 2 C. On voit que, après transformation de Fourier, les réponses latérales $+ \Delta$ i ne sont pas obtenues pour les mêmes valeurs de la différence de marche D et peuvent donc être facilement repérées et isolées dans la mesure où l'écart entre les fréquences de codage associées à deux capteurs quelconques est supérieur à l'extension spatiale de la transformée de Fourier $\widetilde{B}\,\widetilde{T}$ du flux transmis par chaque capteur.

Les figures 3 A, 3 B, 3 C et 3 D illustrent l'influence des variations de transmission spectrale des capteurs sur la forme des réponses latérales $+ \Delta$ i obtenues après démodulation par transformation de Fourier. Les spectres transmis par les éléments sensibles des capteurs sont représentés dans les figures 3 A et 3 c, tandis que les réponses latérales correspondantes $+ \Delta$ i sont représentées dans les figures 3 B et 3 D. On voit que l'information contenue dans le spectre transmis par l'élément sensible d'un capteur est en relation directe avec l'information qui est contenue dans le signal démodulé, cette relation étant du type transformation du Fourier.

Il en résulte que le procédé et le dispositif selon l'invention permettent bien de multiplexer sur une même ligne optique des informations spectrales issues de plusieurs capteurs et utilisant la même porteuse incohérente.

Le traitement des signaux démultiplexés est le suivant:

Les moyens de détection des circuits 22 enregistrent les zones de l'interférogramme correspondant aux réponses latérales $+ \Delta$ i relatives aux différents capteurs. Pour chaque capteur, le signal utile est donc de la forme:

$$S\,i\,(D) = \sum i\,\widetilde{B}\,\widetilde{T}\,i\,(0) + \frac{1}{2}\,\widetilde{B}\,\widetilde{T}\,i\,(D + \Delta\,i)$$

Dans cette relation, le premier terme correspond à la superposition des composantes continues relatives aux différents capteurs, et le deuxième terme est directemente relié au comportement du capteur C i considéré.

Par un traitement approprié de type analogique (par exemple par amplification différentielle ou par couplage alternatif) ou numérique (par soustraction), on supprime le fond continu correspondant à la somme des premiers termes de la relation, pour numériser uniquement le signal utile correspondant au deuxième terme de cette relation.

Ensuite, on réalise par une méthode numérique (programme informatique ou circuit spécialisé du type F F T) une transformation de Fourier inverse sur les valeurs obtenues autour de la différence de marche caractéristique $\Delta$ i, ce qui permet d'avoir accès à l'information significative du comportement du capteur C i, à savoir B $(\sigma)$ T i $(\sigma, X)$.

Il est avantageux d'utiliser, pour s'affranchir des dérives éventuelles de la source de lumière 10 une voie de référence semblable dans sa constitution à un ensemble C i — D C i, mais ne comprenant pas d'éléments sensibles. Le traitement du signal démultiplexé correspondant à cette voie de référence permet de déterminer la distribution spectrale d'énegie de la source lumineuse, c'est-à-dire B $(\sigma)$ et de mieux préciser les variations effectives de transmission T i $(\sigma, X)$ relatives aux différents capteurs.

En variante, les éléments sensibles des divers capteurs $C_i$ peuvent être du type fonctionnant en tout ou rien, leur transmission spectrale variant brusquement autour d'une valeur donnée de la grandeur physique X à mesurer. Le comportement d'un tel élément sensible peut être représenté schématiquement par les relations suivantes:

$$T\,i\,(\sigma, X) = 0 \text{ si } X \leqslant X_0$$

$$T\,i\,(\sigma, X) = T_i\,(\sigma) \text{ si } X > X_0$$

Dans ces conditions, l'information spectrale proprement dite n'a que peu d'intérêt, et l'évaluation de la transmission intégrée de l'élément sensible suffit à définir la situation de la grandeur physique X par rapport à sa valeur prédéterminée $X_0$ pour laquelle la transmission spectrale de l'élément sensible varie brusquement.

Si l'on suppose que la source de lumière 10 est du type homogène, de longueur d'onde centrale $\lambda_0$ et de largeur spectrale $\Delta\lambda$, le signal utile s'écrit comme suit:

$$B\,T\,i\,(D - \Delta\,i) = \cos\,2\pi\ \frac{D - \Delta\,i}{\lambda_0}\ .\ \frac{\sin\left(\pi\ \frac{D - \Delta\,i}{f\,\lambda_0}\right)}{\pi\ \frac{D - \Delta\,i}{f\,\lambda_0}}\ .\ B\,T_0$$

$$\text{où}: f = \lambda_0 / \Delta\lambda$$

Une simple modulation de phase de $2\pi$ autour de la position d'accord $\Delta\,i$ permet d'évaluer l'amplitude $B\,T_0$ du signal utile et donc d'en déduire si l'élément sensible du capteur est dans un état de transmission spectrale correspondant à une valeur de $X \leqslant X_0$, ou dans un état de transmission spectrale correspondant à une valeur de $X > X_0$. Comme précédemment, l'utilisation d'une voie de référence ne comprenant pas d'éléments sensibles peut s'avérer avantageuse dans la mesure où elle permet de recaler en permanence la transmisson des différents capteurs et donc de d'affranchir des dérives de fonctionnement de la source lumineuse.

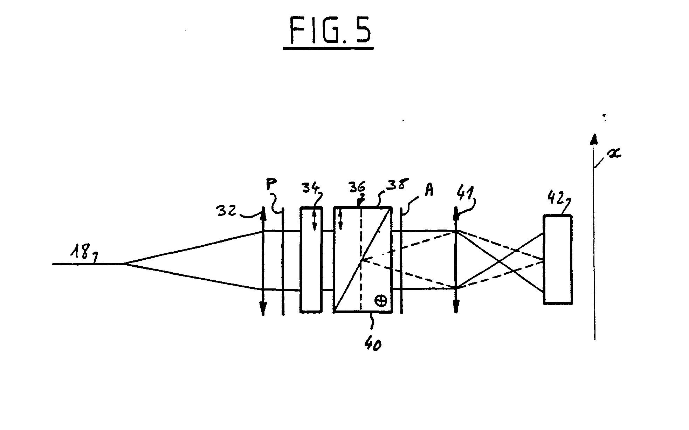

On a représenté en figure 4 un mode de réalisation préféré de l'ensemble capteur-dispositif de codage selon l'invention.

L'extrémité de la fibre optique 14 reliant la source de lumière 10 au capteur, est placée au foyer d'une optique de collimation 24 qui fournit un faisceau de lumière parallèle formant un polariseur P. Ce polariseur est suivi d'une lame 26 de matière biréfringente uniaxe, taillée parallèlement à son axe, puis par un analyseur A et par l'élément sensible 28 du capteur, dont la transmission spectrale varie en fonction de la grandeur physique X à mesurer. La lumière transmise par cet ensemble est reprise par une optique de sortie 30 au foyer de laquelle est placée l'extrémité de la fibre optique 16 raccordée par la fibre optique 18 au dispositif de démodulation 20. La lame 26 est caractérisée par un axe lent d'indice n L et un axe rapide d'indice n R. La direction de polarisation fait un angle de 45° avec l'axe lent et l'ensemble polariseur P — analyseur A est disposé en configuration croisée ou parallèle. Du fait des interférences entre les deux états de polarisation de la lumière, le flux transmis par cet ensemble capteur-dispositif de codage présente une modulation spectrale périodique ou quasi-périodique à une fréquence égale à la différence de marche qu'il procure, pour autant que cette différence de marche $\Delta$ soit supérieure à la longueur de cohérence de la source de lumière 10, $\Delta$ étant donné par la relation:

$$\Delta = e\,(n\,L - n\,R) = e.\Delta\,n\,(\sigma)$$

$$\text{où}: e = \text{épaisseur de la lame 26.}$$

Cette différence de marche présente une certaine dépendance spectrale, de sorte qu'il est avantageux d'utiliser dans le dispositif de démodulation un interféromètre biréfringent de même constitution et présentant une dépendance spectrale similaire, de manière à en compenser différentiellement les effets. Cette compensation est d'autant plus utile que la source de lumière utilisée est de grande largeur spectrale (cas d'une lampe à filament).

L'interféromètre biréfringent utilisé pour la démodulation des informations pourra être un interféromètre à balayage (par exemple du type Bravais) ou un interféromètre statique (du type Babinet ou Wollaston). Dans le cas où l'on utilise un interféromètre à balayage, l'enregistrement du signal utile est obtenu au moyen d'un détecteur photo-électrique unique, pendant le déplacement d'un élément mobile permettant de faire varier continûment la différence de marche dans l'interféromètre. Si l'on utilise un interféromètre statique, le signal utile relatif à chaque capteur est enregistré à l'aide d'un détecteur multipoints, tel qu'une barrette de diodes C C D à transfert de charge, la variation de la différence de marche étant obtenue dans le champ de l'interféromètre sans déplacement d'une pièce mobile.

Un mode de réalisation préféré de l'interféromètre de démodulation est représenté en figure 5.

Dans cette figure, l'extrémité de la fibre optique 18 est placée au foyer d'une optique de collimation 32 fournissant un faisceau de lumière parallèle arrivant sur un polariseur P. Ce polariseur est suivi d'une lame 34 de matière biréfringente, de constitution identique à celle de la lame 26 de la figure 4. Cette lame 34 de matière biréfringente est suivie d'un prisme de Wollaston 36, constitué de deux prismes biréfringents élémentaires 38 et 40 qui sont accolés le long d'une face oblique par rapport à l'axe optique du système et qui sont disposés de manière croisée, l'axe lent du prisme élémentaire 38 étant confondu avec l'axe rapide du prisme élémentaire 40. Au centre du champ (sur l'axe optique du système) les épaisseurs de ces deux prismes sont égales. Le prisme de Wollaston 36 est suivi d'un analyseur A associé à une optique de sortie 41 formant une image du champ de franges d'interférence sur un détecteur linéaire multipoints 42, par exemple du type à dides C C D. L'ensemble polariseur P — analyseur A est à configuration croisée ou parallèle, et la direction de polarisation fait un angle de 45° avec les axes neutres de la lame biréfringente 34.

Dans ces conditions, la différence de marche D introduite par ce système 20 de démodulation varie linéairement le long d'une direction optique privilégiée x qui est perpendiculaire à l'axe optique et le long de laquelle sont alignés éléments photosensibles du détecteur multipoints 42.

En pratique, chaque lame biréfringente 34 du système de démodulation, qui correspond à la lame biréfringente 26 d'un ensemble capteur — dispositif de codage, est portée par un disque monté à rotation autour d'un axe parallèle à l'axe optique du système de démodulation et associé à des moyens moteurs permettant de faire tourner ce disque, pour amener successivement les lames biréfringentes sur l'axe optique du système, ce qui permet de démultiplexer les signaux lumineux transmis par la fibre optique de réception 18.

Par ailleurs, les capteurs utilisés dans le dispositif selon l'invention peuvent comprendre des éléments sensibles à une première grandeur physique X à mesurer, par exemple la concentration d'un milieu binaire, tandis que la fréquence de modulation caractéristique de chaque capteur peut varier en fonction d'une autre grandeur physique Y telle que la température. Dans ce cas, les moyens de démodulation, de détection et de traitement utilisés dans l'invention permettent de remonter simultanément aux valeurs de ces deux grandeurs physiques, dans la mesure où:

la localisation de la réponse latérale + Δ dans le signal démodulé permet de quantifier la valeur de la fréquence de modulation utilisée pour le codage (et donc d'obtenir la valeur de la grandeur physique Y),

l'enregistrement du signal démodulé autour de la différence de marche +Δ, permet, après un traitement approprié (suppression du fond continu et transformation de Fourier inverse) de déterminer la transmission spectrale de l'élément sensible du capteur (et donc la valeur de la grandeur X.

Si, de plus, la transmission spectrale de l'élément sensible du capteur est une fonction des deux grandeurs physiques X et Y, la mesure séparée de la seconde grandeur physique Y permet de s'affranchir de la dépendance de la transmission spectrale en Y, et donc de remonter de manière exacte à la valeur de la grandeur physique X.

**Revendications**

1. Procédé de détection opto-électronique à distance de grandeurs physiques, au moyen de capteurs C 1, C 2, . . . C i qui comprennent chacun un élément sensible (28) dont la transmission spectrale varie en fonction d'une grandeur physique X à mesurer, qui sont éclairés par un faisceau de lumière incohérente et qui transmettent des signaux lumineux à des moyens (20, 22) d'analyse spectrale, caractérisé en ce qu'il consiste à réaliser un codage des signaux des capteurs C i en superposant à la lumière transmise par l'élément sensible de chaque capteur, une modulation périodique ou quasi-périodique de son spectre à une fréquence caractéristique du capteur considéré, à transmettre ces signaux ainsi modulés par une fibre optique (18) aux moyens précités (20, 22) d'analyse spectrale, à effectuer un décodage ou démultiplexage des signaux par transformation de Fourier par voie optique pour isoler le signal relatif à chaque capteur, puis à traiter ce signal pour l'obtention de la valeur de la grandeur physique X correspondante.

2. Procédé selon la revendication 1, caractérisé en ce que le codage par modulation de spectre est réalisé au moyen d'un interféromètre à deux ondes D C i, comprenant par exemple une lame biréfringente (26) de constitution déterminée qui est associée à l'élément sensible (28) du capteur, le démultiplexage étant réalisé au moyen d'un interféromètre (20) à deux ondes, comprenant par exemple une lame biréfringente (34) identique à celle (26) du capteur.

3. Procédé selon la revendication 1 ou 2 caractérisé en ce que, pour chaque capteur, on enregistre le signal résultant de la transformation de Fourier et on lui applique une opération mathématique du type transformation de Fourier inverse réalisée par voie numérique.

4. Procédé selon la revendication 3, caractérisé en ce que la fréquence de modulation spectrale d'un capteur varie en fonction d'une deuxième grandeur physique différente de celle agissant sur l'élément sensible du capteur, le signal démultiplexé par transformation de Fourier permettant de remonter simultanément aux valeurs de ces deux grandeurs.

5. Procédé selon la revendication 1 ou 2, caractérisé en ce que les éléments sensibles (28) des capteurs fonctionnent en tout ou rien par rapport à une valeur prédéterminée de la grandeur physique correspondante, et ce qu'on enregistre l'intensité apparente du signal démultiplexé de chaque capteur pour en déduire létat de la grandeur physique par rapport à sa valeur prédéterminée.

6. Dispositif de détection opto-électronique à distance de grandeurs physiques, comprenant une source (10) de lumière incohérente reliée par fibre optique (12, 14) à des capteurs C 1, C 2, . . . C i qui comportent chacun un élément sensible (28) dont la transmission spectrale varie en fonction d'une grandeur physique à mesurer, et qui sont reliés par fibre optique (16, 18) à des moyens d'analyse spectrale, caractérisé en ce que chaque capteur comprend un moyen D C 1, D C 2, . . . D C i de codage par modulation spectrale réalisant une modulation périodique ou quasi-périodique de la lumière transmise par l'élément sensible à une fréquence caractéristique du capteur considéré, chaque capteur étant raccordé aux moyens (20, 22) d'analyse spectrale par une fibre optique (18) commune à tous les capteurs, et en ce que les moyens d'analyse spectrale comprennent un interféromètre (20) à deux ondes réalisant par voie optique une transformation de Fourier des signaux reçus des capteurs pour repérer, grâce à sa fréquence caractéristique, le signal relatif à chaque capteur, le dispositif comprenant également des moyens (22) de détection des signaux démultiplexés et de traitement de ces signaux pour en déduire les valeurs des grandeurs physiques détectées.

7. Dispositif selon la revendication 6, caractérisé en ce que le moyen D C i de codage par modulation spectrale est un interféromètre à deux ondes, permettant d'introduire entre ces deux ondes une différence de marche caractéristique du capteur correspondant.

8. Dispositif selon la revendication 6 ou 7, caractérisé en ce que le moyen D C i de codage par modulation spectrale comprend une lame bréfingente (26) de constitution déterminée placée entre des polariseurs P, A croisés ou parallèles au voisinage immédiat de l'élément sensible (28) du capteur.

9. Dispositif selon la revendication 8, caractérisé en ce que l'interféromètre (20) de démultiplexage comprend un ensemble de lames biréfringentes (34) dont chacune est identique à la lame biréfringente (26) d'un capteur correspondant, et des moyens pour amener cxes lames une à une sur l'axe optique de l'interféromètre (20).

10. Dispositif selon l'une des revendications 6 à 9, caractérisé en ce que les moyens de détection comprennent des moyens (30) d'enregistrement de la totalité du signal utile démultiplexé relatif à chaque capteur, et en ce que les moyens de traitement comprennent des moyens de réalisation par voie numérique d'une transformation de Fourier inverse appliquée au signal enregistré.

11. Dispositif selon la revendication (10) caractérisé en ce que le moyen D C i de codage par modulation spectrale est sensible à une deuxième grandeur physique différente de celle agissant sur l'élément sensible (28) du capteur, et en ce que les moyens de traitement précités permettent de déterminer simultanément les valeurs de ces deux grandeurs.

12. Dispositif selon l'une des revendications 6 à 9, caractérisé en ce que les éléments sensibles (28) des capteurs sont du type fonctionnant en tout ou rien par rapport à une valeur prédéterminée de la grandeur physique correspondante, et en ce que les moyens (22) de détection comprennent des moyens d'enregistrement de l'intensité apparente du signal démultiplexé relatif à chaque capteur.

**Patentansprüche**

1. Verfahren zum optoelektronischen Fernerfassen physikalischer Größen mittels Sensoren C1, C2, . . . Ci, von denen jeder ein empfindliches Element (28) aufweist, dessen spektrale Transmission sich in Abhängigkeit von einer zu messenden physikalischen Größe X ändert, die durch ein inkohörentes Lichtbündel beleuchtet werden und die Lichtsignale zu Spektralanalyse-Mitteln (20, 22) übertragen, dadurch gekennzeichnet, daß es in folgendem besteht: Schaffen einer Codierung der Signale der Sensoren Ci dadurch, daß auf das durch das empfindliche Element jedes Sensors durchgelassene Licht eine periodische oder quasi-periodische Modulation seines Spektrums mit einer charakteristischen Frequenz des betrachteten Sernsors überlagert wird, Übertragen dieser auf diese Weise modulierten Signale durch eine optische Faser (18) zu den Spektralanalyse -Mitteln (20, 22), Durchführen einer Decodierung oder eines Demultiplexeus der Signale mittels Fourier-Transformation auf optischem Wege, um das auf jeden Sensor bezügliche Signal zu trennen und sodann Verarbeiten dieses Signals, um den Wert der entsprechenden physikalischen Größe X zu erhalten.

2. Verfahren nach Anspruch 1, dadurch gekennzeichnet, daß die Codierung durch Spektrummodulation mittels eines Zweiwellen-Interferometers DCi durchgeführt wird, das beispielsweise eine doppelbrechende Platte (26) bestimmter Beschaffenheit aufweist, die einem empfindlichen Element (28) des Sensors zugeordnet ist, wobei das Demultiplexen mittels eines Zweiwellen-Interferometers (20) durchgeführt wird, das beispielsweise eine jener (26) des Sensors identische doppelbrechende Platte (34) aufweist.

3. Verfahren nach Anspruch 1 oder 2, dadurch gekennzeichnet, daß das durch die Fourier-Transformation resultierende Signal für jeden Sensor registriert wird und auf es eine mathematische Operation der Art einer auf digitalem Wege durchgeführten inversen Fourier-Transformation angewandt wird.

4. Verfahren nach Anspruch 3, dadurch gekennzeichnet, daß sich die Spektrummodulationsfrequenz eines Sensors in Abhängigkeit von einer zweiten physikalischen Größe ändert, die von jener, auf ein empfindliches Element des Sensors wirkenden verschieden ist, wobei das durch eine Fourier Transformation einem Demultiplexen unterworfene Signal es ermöglicht, gleichzeitig zu den Werten dieser zwei Größen zurückzukehren.

5. Verfahren nach Anspruch 1 oder 2, dadurch gekennzeichnet, daß die empfindlichen Elemente (28) der Sensoren bezüglich eines vorbestimmten Wertes der entsprechenden physikalischen Größe nach Alles — oder — Nichts arbeiten und daß die scheinbare Intensität des einem Demultiplexen unterworfenen Signales jedes Sensors registriert wird, um daraus den Zustand der physikalischen Größe bezüglich ihres vorbestimmten Wertes abzuleiten.

6. Vorrichtung zum optoelektronischen Fernerfassen physikalischer Größen mit einer Quelle (10) inkohörenten Lichtes, die durch eine optische Faser (12, 14) mit Sensoren C1, C2 . . . Ci verbunden ist, von denen jeder ein empfindliches Elemetng (28) aufweist, dessen spektrale Transmission sich in Abhängigkeit von einer zu messenden physikalischen Größe ändert und die durch eine optische Faser (16, 18) mit

EP 0 241 332 B1

Spektralanalyse-Mitteln verbunden sind, dadurch gekennzeichnet, daß jeder Sensor ein Mittel DC1, DC2, ... DCi zum Codieren durch Spektrummodulation aufweist, das eine periodische oder quasi-periodische Modulation des durch das empfindliche Element durchgelassenen Lichtes mit einer charakteristischen Frequenz des betrachteten Sensors duchführt, wobei jeder Sensor mit Spektralanalyse-Mitteln (20, 22) durch eine allen Sensoren gemeinsame optische Faser (18) verbunden ist und daß die Spektralanalyse-Mittel ein Zweiwellen-Interferometer (20) aufweisen, das auf optischem Wege eine Fourier-Transformation der erhaltenen Signale der Sensoren durchführt, um das auf jeden Sensor bezügliche Signal dank seiner charakteristischen Frequenz zu ermitteln, wobei die Vorrichtung gleichermaßen Mittel (22) zum Erfasen der einem Demultiplexen unterworfenen Signale und zum Verarbeiten dieser Signale aufweist, um daraus die Werte der erfaßten physikalischen Größen abzuleiten.

7. Vorrichtung nach Anspruch 6, dadurch gekennzeichnet, daß das Mittel DCi zum Codieren durch Spektrummodulation ein Zweiwellen-Interferometer ist, das es ermöglicht, zwischen diesen zwei Wellen einen charakteristischen Gangunterschied des entsprechenden Sensors einzuführen.

8. Vorrichtung nach Anspruch 6 oder 7, dadurch gekennzeichnet, daß das Mittel DCi zum Codieren durch Spektrummodulation eine doppelbrechende Plate (26) bestimmter Beschaffenheit aufweist, die zwischen Polarisatoren P, A gelegen ist, die in der unmittelbaren Nachbarschaft des empfindlichen Elementes (28) des Sensors gekreuzt oder parallel liegen.

9. Vorrichtung nach Anspruch 8, dadurch gekennzeichnet, daß das Interferometer (20) zum Demultiplexen einen Satz doppelbrechender Platten (34), von denen jede der doppelbrechenden Platte (26) eines entsprechenden Sensors identisch ist, und Mittel zum Einzel-Zuführen dieser Platten auf die optische Achse des Interferometers (20) aufweist.

10. Vorrichtung nach einem der Ansprüche 6 bis 9, dadurch gekennzeichnet, daß die Mittel zum Erfassen Mittel (30) zum Registrieren der Gesamtheit des auf jeden Sensor bezüglichen, nützlichen, einem Demultiplexen unterworfenen Signales aufweisen und daß die Mittel zum Verarbeiten Mittel zum Durchführen einer auf das registrierte Signal angewandten inversen Fourier-Transformation auf digitalem Wege aufweisen.

11. Vorrichtung nach Anspruch 10, dadurch gekennzeichnet, daß das Mittel DCi zum Codieren durch Spektrummodulation auf eine zweite physikalische Größe anspricht, die von jener, auf das empfindliche Element (28) des Sensors wirkender verschieden ist und daß die Mittel zum Verarbeiten es ermöglichen, die Werte dieser zwei Größen gleichzeitig zu bestimmen.

12. Vorrichtung nach einem der Ansprüche 6 bis 9, dadurch gekennzeichnet, daß die empfindlichen Elemente (28) der Sensoren der Art sind, die nach Alles — oder — Nichts bezüglich eines vorbestimmten Wertes der entsprechenden physikalischen Größe arbeitet und daß die Mittel (22) zum Erfassen Mittel zum Verarbeiten der scheinbaren Intensität des einem Demultiplexen unterworfenen auf jeden Sensor bezüglichen Signales aufweisen.

**Claims**

1. An optoelectronic method of remotely detecting physical magnitudes by means of sensors C1, C2, ..., Ci each including a sensitive element (28) whose spectral transmission varies as a function of a physical magnitude X to be measured, the sensors being illuminated by an incoherent light beam, and transmitting light signals to spectrum analyzer means (20, 22), the method being characterized in encoding the signals from each sensor Ci by superposing periodic or quasi-periodic modulation of its spectrum at a frequency characteristic of the sensor under consideration onto the light transmitted by the sensitive element of each sensor, in transmitting the signals modulated in this way via an optical fiber (18) to the said spectrum analyzer means (20, 22), in decoding or demultiplexing the signals by performing the Fourier transform optically in order to isolate the signal relating to each sensor, and then in processing this signal in order to obtain the value of the corresponding physical magnitude X.

2. A method according to claim 1, characterized in that the spectrum modulation encoding is performed in each sensor by means of a two-wave interferometer DCi comprising, for example, a birefringent plate (26) of determined constitution which is associated with the sensitive element (28) of the sensor, with demultiplexing being provided by means of a two-wave interferometer (20) comprising, for example, a birefringent plate (38) identical to the plate (26) of the sensor.

3. A method according to claim 1 or 2, characterized in that the signal resulting from the Fourier transform is recorded for each sensor, and in that a mathematical operation of the inverse Fourier transform type is performed thereon by digital means.

4. A method according to claim 3, characterized in that the spectrum modulation frequency of a sensor varies as a function of a second physical magnitude different from that which acts on the sensitive element of the sensor, with the signal as demultiplexed by the Fourier transform making it possible to gain access simultaneously to the values of both of these magnitudes.

5. A method according to claim 1 or 2, characterized in that the sensitive elements (28) of the sensors operate in on/off mode about a predetermined value of the corresponding physical magnitude, and in that the apparent intensity of the demultiplexed signal from each sensor is recorded in order to deduce the state of the physical magnitude relative to its predetermined value.

8

6. An optoelectronic system for remote detection of physical magnitudes, the system comprising a source (10) of incoherent light connected by optical fiber (12, 14) to sensors C1, C2, . . ., Ci each including a sensitive element (28) whose spectral transmission varies as a function of a physical magnitude to be measured, said sensors being connected by optical fiber (16, 18) to spectrum analyzer means, the system being characterized in that each sensor includes spectrum modulation encoding means DC1, DC2, . . ., DCi performing periodic or quasi-periodic modulation of the light transmitted by the sensitive element at a frequency which is characteristic of the sensor in question, each sensor being connected to the spectrum analyzer means (20, 22) by an optical fiber (18) which is common to all of the sensors, and in that the spectrum analyzer means comprise a two-wave interferometer (20) optically performing a Fourier transform on the signals received from the sensors in order to distinguish the signal from each sensor by virtue of its characteristic frequency, the system also including detector and processor means (22) for detecting the demultiplexed signals and for processing these signals in order to deduce the values of the detected physical magnitudes.

7. A system according to claim 6, characterized in that each spectrum modulation encoding means DCi is a two-wave interferometer suitable for introducing a path length difference between the two waves which is characteristic of the corresponding sensor.

8. A system according to claim 6 or 7, characterized in that each spectrum modulation encoding means DCi includes a birefringent plate (26) of determined constitution placed between crossed or parallel polarizers P, A in the immediate vicinity of the sensitive element (28) of the sensor.

9. A system according to claim 8, characterized in that the demultiplexing interferometer (20) includes a set of birefringent plates (34) each of which is identical to the birefringent plate (26) of a corresponding one of the sensors, together with means for bringing these plates one by one onto the optical axis of the interferometer (20).

10. A system according to any one of claims 6 to 9, characterized in that the detector means comprise means (30) for recording all of the useful demultiplexed signal relating to each sensor, and in that the processor means comprise means for digitally performing an inverse Fourier transform applied to the recorded signal.

11. A system according to claim 10, characterized in that the spectrum modulation encoding means DCi is sensitive to a second physical magnitude different from that acting on the sensitive element (28) of the sensor, and in that the said processor means are capable of simultaneously determining the values of both of these magnitudes.

12. A system according to any one of claims 6 to 9, characterized in that the sensitive elements (28) of the sensors are of the type operating in on/off mode about a predetermined value of the corresponding physical magnitude, and in that the detector means (22) include means for recording the apparent intensity of the demultiplexed signal relating to each sensor.

FIG. 1A

$10$

$12$

$14$ $14$ $14$

$C_1$ $C_2$ $C_i$

$DC_1$ $DC_2$ $DC_i$

$20$

$18$

$22$

FIG. 1B

X

$C_i$

$DC_i$

$B(\sigma)$

$\sigma$

$B(\sigma)$

$B(\sigma)T_i(\sigma)$

$1/\Delta_i$

$B(\sigma)$ → $T_i(\sigma,X), \Delta_i$ → $\frac{1}{2} B(\sigma)T_i(\sigma,X)\left[1+\cos 2\pi\sigma\Delta_i\right]$

FIG. 4

$24$ P $26$ A $28$ $30$

$14$ $16$

## FIG.2A

## FIG.2C

## FIG.2B

## FIG.2D

## FIG.3A

## FIG.3C

## FIG.3B

## FIG.3D

2

# FIG. 5